# EUROPÄISCHE PATENTSCHRIFT

(11) **EP 0 512 277 B1**
(45) Veröffentlichungstag und Bekanntmachung des Hinweises auf die Patenterteilung: **27.09.1995**
(21) Anmeldenummer: 92106225.3
(22) Anmeldetag: 10.04.1992
(51) Int. Cl.: B01D 3/20, B01D 3/32, B01J 14/00

(54) **Flüssigkeitsverteilerboden**
Liquid distributor plate
Fond pour la distribution de liquides

(30) Priorität: 02.05.1991 DE 4114278
(43) Veröffentlichungstag der Anmeldung: 11.11.1992
(73) Patentinhaber: JULIUS MONTZ GmbH, D-40723 Hilden (DE)
(72) Erfinder: Zich, Egon, W-5653 Leichlingen 2 (DE); Jansen, Helmut, W-4010 Hilden (DE); Rietfort, Thomas, W-4250 Bottrop (DE); Leben, Jochen, W-4000 Düsseldorf (DE)
(74) Vertreter: COHAUSZ HASE DAWIDOWICZ & PARTNER

(56) Entgegenhaltungen:
- DE-A- 2 206 230
- DE-A- 2 919 462
- DE-A- 3 141 930
- DE-A- 3 306 636
- DE-C- 2 752 391

## Beschreibung

Die Erfindung betrifft einen Flüssigkeitsverteilerboden in Wärme-, Stoffaustauschanlagen oder Reaktoren.

Bei Flüssigkeitsverteilerböden in Trennkolonnen bzw. Stoffaustauschanlagen ist es bekannt in den Flüssigkeitsrinnen, in denen die Flüssigkeit steht, senkrechte Rohrabschnitte anzuordnen, die kleine Öffnungen aufweisen, durch die die Flüssigkeit von der Rinne in das Rohr fließt, um dann nach unten auf den unteren Verteilerboden zu fließen bzw. zu tropfen. Darüberhinaus ist es aus der DE-A-3306636 bekannt, bei einem Flüssigkeitsverteiler für eine Gegenstromkolonne in den Seitenwänden der Flüssigkeitsverteilerrinnen Öffnungen anzuordnen, in denen Drahtstücke eingehängt sind, über die die Flüssigkeit außen an der Rinnenwand entlang fließt zu nach unten gerichteten Fingern, von denen die Flüssigkeit abtropft.

Aufgabe der Erfindung ist es, auch bei kleinen Flüssigkeitsmengen eine gleichmäßige und dichte Berieselung des darunter befindlichen Bodens oder der darunter befindlichen Packungsschicht zu erreichen.

Diese Aufgabe wird erfindungsgemäß dadurch gelöst,
- daß im Flüssigkeitsverteilerboden etwa waagerecht liegende Flüssigkeitsverteilerrinnen angeordnet sind, von denen die Flüssigkeit abfließt und/oder abtropft,
- daß unterhalb des Rinnenbodens ein Topf oder mehrer Töpfe sind, die die aus Öffnungen der Rinne austretende Flüssigkeit aufnehmen,
- daß am unteren Rand der Topfwand Finger befestigt oder angeformt sind, die nach außen gebogen sind, von denen die Flüssigkeit abfließt und/oder abtropft und
- daß oberhalb der Finger in der Topfwand Öffnungen sind, durch die die Flüssigkeit nach außen tritt und an der Topfaußenwand herunter zu den Fingern fließt.

Die aus der Verteilerrinne nach unten austretende Flüssigkeit wird im Topf gesammelt und von diesem gleichmäßig zu den Fingern abgegeben, so daß eine sehr gleichmäßige und dichte Berieselung auch dann erzielt wird, wenn nur kleine Flüssigkeitsmengen abgegeben werden. Damit wird bei einfachster Konstruktion und gleichmäßiger Verteilung eine optimale Wirkung bei großen, mittleren und kleinen Flüssigkeitsmengen erreicht.

Besonders vorteilhaft ist es hierbei, wenn im Rinnenboden mindestens eine Öffnung oberhalb jedes Topfes ist, durch die die Flüssigkeit aus der Rinne in den Topf fließt. Alternativ kann aber auch im Rinnenboden oberhalb jedes Topfes mindestens ein senkrechtes Rohr befestigt sein, das den Rinnenboden nach oben überragt. Hierdurch wird eine besonders gleichmäßige und gesteuerte Flüssigkeitsabgabe nach unten erzielt.

Besonders vorteilhaft ist es, wenn das Rohr den Rinnenboden nach unten überragt und in den Topf hineinreicht. Eine sehr gleichmäßige Übergabe von Flüssigkeit auch bei geringen Mengen wird erreicht, wenn in den Öffnungen der Topfwand je ein Drahtstück befestigt ist, das an der Außenseite der Topfwand nach unten sich zum jeweiligen Finger erstreckt. Hierbei kann das untere Ende des Drahtstückes in einer Topfwandöffnung eingesteckt werden, die direkt oberhalb des jeweiligen Fingers oder im Anfangsbereich des Fingers angeordnet ist.

Zwei Ausführungsbeispiele der Erfindung sind in den Zeichnungen dargestellt und werden im folgenden näher beschrieben. Es zeigen
- Figur 1: einen senkrechten Schnitt durch die Verteilerrinne mit einem Rohr im Verteilerboden zur Übergabe von Flüssigkeit von der Verteilerrinne zum Verteilertopf und
- Figur 2: einen senkrechten Schnitt durch die Verteilerrinne mit Öffnungen im Rinnenboden, durch die die Flüssigkeit in den bzw. die Töpfe fließt.

Ein Flüssigkeitsverteilerboden in Wärmeaustauschanlagen, Stoffaustauschanlagen oder Reaktoren weist waagerechte Flüssigkeitsverteilerrinnen 1 auf, deren Höhe H meist größer ist als deren Breite B und in deren Rinnenboden zu in regelmäßigen Abständen Rohrabschnitte senkrecht befestigt sind, die nach oben und unten über den Rinnenboden hinausragen. In einem Abstand A zum Rinnenboden 2 befindet sich mindestens eine Öffnung 4 in der Wandung des Rohrabschnitts 3, durch die in der Verteilerrinne 1 befindliche Flüssigkeit in den Rohrabschnitt 3 fließen kann, um durch den Rohrabschnitt 3 hindurch nach unten zu gelangen.

Der Rohrabschnitt 3 ist im unteren Bereich von einem Topf 5 umgeben, der mit seiner Oberseite an der Unterseite des Rinnenbodens 2 befestigt ist. Der Rohrabschnitt 3 ragt in diesen Topf 5 hinein, so daß die durch die Öffnung 4 fließende Flüssigkeit den Topf 5 bis zu einem Flüssigkeitsspiegel füllt, der durch Öffnungen 6 bestimmt ist, die in der Seitenwand des Topfes 5 sich befinden. Durch die Öffnungen 6 fließt die Flüssigkeit auf die Topfaußenwand, wobei in diesem Bereich Drahtstücke 7 in die Öffnungen 6 eingehängt sind, die außen am Topf 5 von jeder Öffnung 6 aus nach unten ragen und mit ihren unteren Enden in Öffnungen 8 einliegen, die in einem Bereich 9 der Topfwand sich befinden, der über den Topfboden 10 nach unten hinausragt.

Der Topfwandbereich 9 bildet nach unten hin ragende Finger 11, in die sich jeweils unterhalb einer Öffnung 8 und damit eines Drahtstückes 7 befinden, so daß die Flüssigkeit aus den Öffnungen 6 über die Drahtstücke 7 zu den Fingern 11 fließt und von deren Enden abtropft. Die Finger sind hierbei weit nach außen gebogen, um einen großen Bereich zu überdecken.

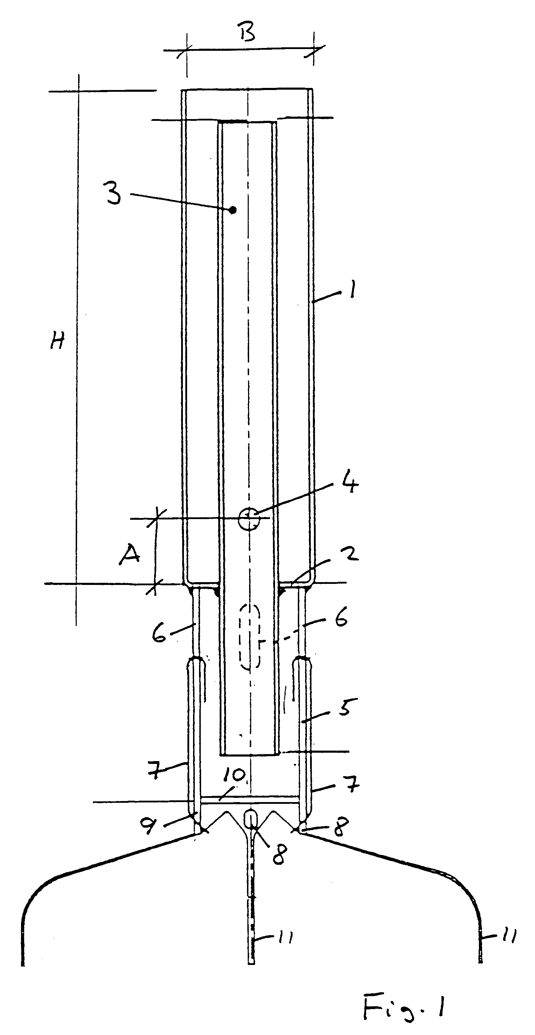

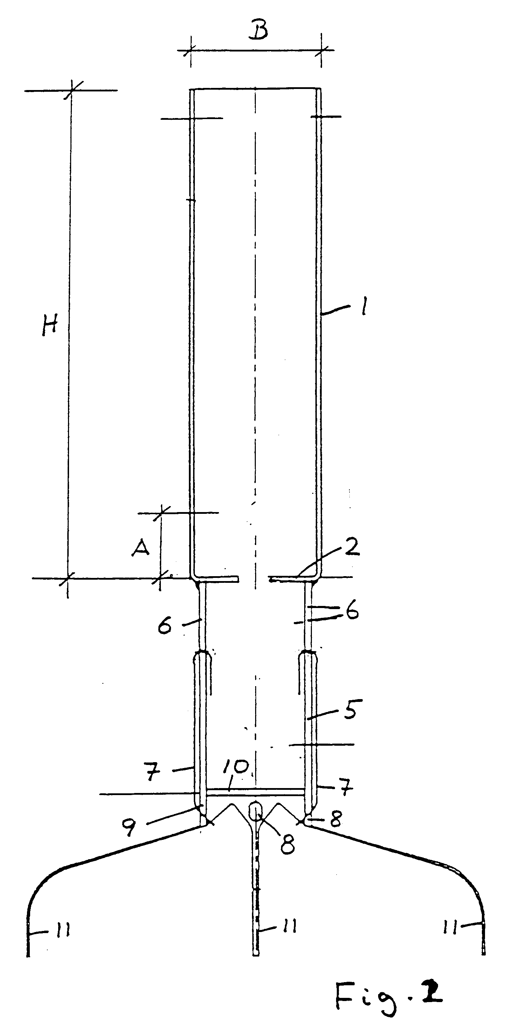

Die in Figur 2 dargestellte alternative Ausführungsform unterscheidet sich von der nach Figur 1 dadurch, daß statt des Rohrabschnittes 3 im Rinnenboden 2 sich Öffnungen befinden, durch die die Flüssigkeit aus der Verteilerrinne 1 in den Topf 5 fließt.

## Patentansprüche

1. Flüssigkeitsverteilerboden in Wärme-, Stoffaustauschanlagen oder Reaktoren **dadurch gekennzeichnet,**
- daß im Flüssigkeitsverteilerboden etwa waagerecht liegende Flüssigkeitsverteilerrinnen (1) angeordnet sind, von denen die Flüssigkeit abfließt und/oder abtropft,
- daß unterhalb des Rinnenbodens (2) ein Topf (5) oder mehrere Töpfe sind, die die aus Öffnungen der Rinne (1) austretende Flüssigkeit aufnehmen,
- daß am unteren Rand (9) der Topfwand Finger (11) befestigt oder angeformt sind, die nach außen gebogen sind, von denen die Flüssigkeit abfließt und/oder abtropft und
- daß oberhalb der Finger (11) in der Topfwand Öffnungen (6) sind, durch die die Flüssigkeit nach außen tritt und an der Topfaußenwand herunter zu den Fingern (11) fließt.

2. Flüssigkeitsverteilerboden nach Anspruch 1,
**dadurch gekennzeichnet,** daß im Rinnenboden (2) mindestens eine Öffnung oberhalb jedes Topfes (5) ist, durch die die Flüssigkeit aus der Rinne (1) in den Topf (5) fließt.

3. Flüssigkeitsverteilerboden nach Anspruch 1,
**dadurch gekennzeichnet,** daß im Rinnenboden (2) oberhalb jedes Topfes (5) mindestens ein senkrechtes Rohr (3) befestigt ist, das den Rinnenboden (2) nach oben überragt.

4. Flüssigkeitsverteilerboden nach Anspruch 3,
**dadurch gekennzeichnet,** daß das Rohr (3) den Rinnenboden (2) nach unten überragt und in den Topf (5) hineinreicht.

5. Flüssigkeitsverteilerboden nach einem der vorherigen Ansprüche, **dadurch gekennzeichnet,** daß in den Öffnungen (6) der Topfwand je ein Drahtstück (7) befestigt ist, das an der Außenseite der Topfwand nach unten sich zum jeweiligen Finger (11) erstreckt.

6. Flüssigkeitsverteilerboden nach Anspruch 5,
**dadurch gekennzeichnet,** daß das untere Ende des Drahtstückes (7) in einer Topfwandöffnung (8) eingesteckt ist, die direkt oberhalb des jeweiligen Fingers (11) oder im Anfangsbereich des Fingers angeordnet ist.

## Claims

1. A liquid distributor plate in heat exchanger installations, mass transfer installations or reactors, characterized in that
- disposed in the liquid distributor plates are substantially horizontal liquid distributor channels (1) from which the liquid flows and/or drips downwards,
- provided below the channel bottom (2) is one or more pots (5) which receive the liquid emerging from openings in the channel (1),
- attached to or moulded on the lower edge (9) of the pot wall are fingers (11) which are bent outwardly and from which the liquid flows and/or drips downwards, and
- above the fingers (11) the pot wall is formed with openings (6) through which the liquid emerges to the exterior and flows down the outside wall of the pot to the fingers (11).

2. A liquid distributor plate according to claim 1,
characterized in that the channel bottom (2) is formed above each pot (5) with at least one opening through which the liquid flows through the channel (1) into the pot (5).

3. A liquid distributor plate according to claim 1,
characterized in that attached to the channel bottom (2) above each pot (5) is at least one vertical tube (3) which projects upwards beyond the channel bottom (2).

4. A liquid distributor plate according to claim 3,
characterized in that the tube (3) projects downwards beyond the channel bottom (2) and extends into the pot (5).

5. A liquid distributor plate according to one of the preceding claims, characterized in that attached to each of the openings (6) in the pot wall is a piece of wire (7) which extends downwards on the outside of the pot wall to the respective finger (11).

6. A liquid distributor plate according to claim 5,
characterized in that the bottom end of the piece of wire (7) is inserted into an opening (8) in the top wall which is disposed directly above the respective finger (11) or in the starting zone of the finger.

## Revendications

1. Fond distributeur de liquide dans des installations d'échangeurs de chaleur, de matières ou des réacteurs, caractérisé en ce
- que, dans le fond distributeur de liquide sont disposés des conduits distributeurs de liquide (1) se trouvant sensiblement horizontaux, desquels le liquide s'écoule et/ou coule goutte à goutte,
- que, au-dessous du fond de conduit (2), se trouvent un pot (5) ou plusieurs pots qui reçoivent le liquide sortant d'ouvertures du conduit (1),
- que, sur le bord inférieur (9) de la paroi du pot, sont fixés ou formés des doigts (11) qui sont recourbés vers l'extérieur, desquels le liquide s'écoule et/ou coule goutte à goutte et
- que, au-dessus des doigts (11), dans la paroi du pot, se trouvent des ouvertures (6) à travers lesquelles le liquide s'écoule vers l'extérieur et coule vers le bas sur la paroi extérieure du pot jusqu'aux doigts (11).

2. Fond distributeur de liquide selon la revendication 1,
caractérisé en ce que, dans le fond de conduit (2), se trouve au moins une ouverture au-dessus de chaque pot (5), à travers laquelle le liquide coule hors du conduit (1) dans le pot (5).

3. Fond distributeur de liquide selon la revendication 1,
caractérisé en ce que, dans le fond de conduit (2), au-dessus de chaque pot (5), est fixé au moins un tube vertical (3) qui fait saillie du fond de conduit (2) vers le haut.

4. Fond distributeur de liquide selon la revendication 3,
caractérisé en ce que le tube (3) fait saillie du fond de conduit (2) vers le bas et arrive jusque dans le pot (5).

5. Fond distributeur de liquide selon l'une des revendications précédentes,
caractérisé en ce que, dans les ouvertures (6) de la paroi du pot, est fixé chaque fois un morceau de câble (7) qui s'étend vers le bas sur la face extérieure de la paroi du pot vers le doigt (11) respectif.

6. Fond distributeur selon la revendication 5,
caractérisé en ce que l'extrémité inférieure du morceau de câble (7) est enfoncé dans une ouverture (8) de la paroi du pot qui est disposée directement au-dessus du doigt (11) respectif ou dans la zone initiale du doigt.
